**Europäisches Patentamt**

**European Patent Office**

**Office européen des brevets**

(11) Veröffentlichungsnummer: **0 001 435**
**A1**

## EUROPÄISCHE PATENTANMELDUNG

(21) Anmeldenummer: **78101016.0**

(22) Anmeldetag: **28.09.78**

(51) Int. Cl.²: **C 01 G 49/02**
**// G11B5/62**

(30) Priorität: **06.10.77 DE 2744887**

(43) Veröffentlichungstag der Anmeldung: **18.04.79**
**Patentblatt 79/8**

(84) Benannte Vertragsstaaten: **DE FR GB NL**

(71) Anmelder: **BASF Aktiengesellschaft, Carl-Bosch-Strasse 38, D-6700 Ludwigshafen (DE)**

(72) Erfinder: **Elff, Klaus, Kernerweg 3, D-6706 Wachenheim (DE)**
Erfinder: **Becker, Hans-Juergen, Dr., Raiffeisenstrasse 10, D-6701 Goennheim (DE)**
Erfinder: **Loeser, Werner, Dr., Klagenfurter Strasse 16, D-6700 Ludwigshafen (DE)**
Erfinder: **Jakusch, Helmut, Dr., Lorscher Ring 6c, D-6710 Frankenthal (DE)**
Erfinder: **Grau, Werner, Dr., Vogesenstrasse 3, D-7601 Willstaett (DE)**

(54) **Verfahren zur Herstellung von agglomeratfreiem Gamma-Eisen(III)oxid.**

(57) Die Erfindung betrifft ein Verfahren zur Herstellung von agglomeratfreiem Gamma-Eisen(III)oxid durch Oxidation von Eisen(II)hydroxid in Suspension eines alkalischen oder sauren Mediums mit sauerstoffenthaltenden Gasen, abtrennen des dabei entstehenden Eisen(III)oxidhydroxids, herstellen einer pumpfähigen Masse aus dem Eisen(III)-oxidhydroxid mit einer dagegen inerten Flüssigkeit, Versprühen dieser Masse in einem Behälter mittels einer rotierenden Scheibe und gleichzeitiges Trocknen des Eisen(III)-oxidhydroxids durch gegenströmende inerte, auf Temperaturen oberhalb des Siedepunktes der eingesetzten Flüssigkeit erhitzte Gase.

EP 0 001 435 A1

BASF Aktiengesellschaft                    O.Z. 0050/032821


Verfahren zur Herstellung von agglomeratfreiem
Gamma-Eisen(III)oxid

Die Erfindung betrifft ein Verfahren zur Herstellung von agglomeratfreiem Gamma-Eisen(III)oxid, das, ausgehend von nadelförmigem Eisen(III)oxidhydroxid, durch Reduzieren zum Magnetit und anschließender Reoxidation erhalten wird. Das als Ausgangsmaterial eingesetzte Eisen(III)oxidhydroxid wi: durch Oxidation einer Eisen(II)hydroxid-Suspension in alkalischem oder sauren Medium mit einem sauerstoffenthalten den Gas gebildet.

Nadelförmiges Gamma-Eisen(III)oxid wird seit langem als magnetisierbares Material bei der Herstellung von magnetischen Aufzeichnungsträgern eingesetzt. Diese Eisenoxidteil chen weisen im allgemeinen eine Teilchenlänge von 0,2 bis 1 $\mu$m und ein Längen/Dicken-Verhältnis von 5 : 1 bis 20 : 1 auf. Bei den bekannten aus Eisen(III)oxidhydroxid erhaltenen Gamma-Eisen(III)oxiden liegen die nadelförmigen Einzel teilchen nicht nur regellos durcheinander, sondern sie sind auch in verhältnismäßig viel Raum beanspruchenden Agglomeraten angeordnet. Derartige Materialien zeichnen sich durch eine geringe Stampfdichte aus. So besitzen nach bekannten Verfahren hergestellte Gamma-Eisen(III)oxide Stampfdichten, gemessen nach DIN 53 194, von 0,20 bis 0,60 g/cm$^3$. Demgegenüber liegt die Röntgendichte solcher Gamma-Eisen(III)oxide zwischen 4,59 bis 4,98 g/cm$^3$.

Sob/Fe

Sollen diese Agglomerate während der Einarbeitung des magnetisierbaren Materials in das Bindemittel der Magnetschicht beim Dispergiervorgang aufgelöst werden, um die nadelförmigen Einzelteilchen in der Magnetschicht zur Erzielung der geforderten elektroakustischen Eigenschaften dicht zu packen und in Vorzugsrichtung zu orientieren, so entstehen in der relativ niedrigviskosen Dispersion durch die Einwirkung der Schlag- und Scherkräfte leicht Bruchstücke. Es hat daher nicht an Versuchen gefehlt, bereits vorverdichtete Eisenoxid-Pulver oder -Massen herzustellen.

Verfahren zur Erhöhung der Packungsdichte von magnetischen Materialien in Magnetogrammträgerschichten sind bekannt. So kann dies z.B. durch eine starke Vorverdichtung des lose gepackten Materials auf Stampfdichten bis zu 1,0 $g/cm^3$ im Walzenspalt erreicht werden. Damit ist jedoch meist eine mechanische Beschädigung der nadelförmigen Einzelteilchen verbunden, die zur Verringerung der Koerzitivkraft, Verbreiterung der Schaltfeldstärkenverteilung und zur Verschlechterung der Kopierdämpfung bei Magnetogrammträgern führt.

Aus der DE-AS 1 186 906 ist bekannt, durch inniges Vermischen von Eisenoxidpulver mit einer Trägerflüssigkeit eine steife Paste herzustellen, die dann durch gleichmäßiges Kneten in ein büschelfreies Gemisch überführt wird. Durch Vermischen dieser Paste mit Bindemitteln wird dann eine Dispersion hergestellt, die Magnetschichten mit erhöhtem Pigmentanteil ergeben. Nachteilig an dem Verfahren ist jedoch, daß auf diese Weise sich nicht gleichzeitig die magnetische Vorzugsrichtung der nadelförmigen Magnetpigmente verbessern läßt.

Es bestand daher die Aufgabe, ein Gamma-Eisen(III)oxid bereitzustellen, mit welchem sich in einfacher Weise magnetische Aufzeichnungsträger mit einer hohen Packungsdichte des Eisenoxids in der Magnetschicht herstellen lassen. Insbesondere war Aufgabe der Erfindung, die gewünschte hohe Packungsdichte zu erreichen, ohne durch eine Vorverdichtung des Pulvers oder eine entsprechende Dispergierung des Eisenoxids in der Bindemittellösung außer einer begrenzten Desagglomeration auch eine Zerstörung der Primärteilchen zu bewirken, da bekanntermaßen derartige Bruchstücke die elektroakustischen Eigenschaften von magnetischen Aufzeichnungsträgern nachteilig beeinflussen.

Gegenstand der Erfindung ist daher ein Verfahren zur Herstellung von agglomeratfreiem Gamma-Eisen(III)oxid.

Es wurde nun überraschend gefunden, daß sich nadelförmiges Gamma-Eisen(III)oxid aus nadelförmigem Eisenoxidhydroxid, das durch Oxidation einer Eisen(II)hydroxidsuspension in alkalischem oder saurem Medium mit einem sauerstoffenthaltenden Gas erhalten wird, Reduzieren des Eisen(III)oxidhydroxids zum Magnetit und anschließender Reoxidation zum Gamma-Eisen(III)oxid dann in einfacher Weise agglomeratfrei herzustellen ist, wenn das Eisen(III)oxidhydroxid nach der Herstellung aus dem Reaktionsmedium abgetrennt und vor der weiteren Umwandlung mit einer zum Eisen(III)-oxidhydroxid inerten Flüssigkeit zu einer pumpfähigen Masse angeteigt, diese Masse in einem Behälter mittels einer rotierenden Scheibe versprüht und durch gegenströmende inerte Gase mit einer Temperatur oberhalb des Siedepunktes der eingesetzten Flüssigkeit getrocknet wird.

Derart hergestellte agglomeratfreie Gamma-Eisen(III)oxide weisen zwar eine geringe Stampfdichte (nach Engelmann) von etwa 0,2 bis 0,4 auf, während die nach dem Stand der Technik verarbeiteten Produkte Stampfdichten von etwa 0,6 bis 0,85 g/cm$^3$ besitzen, lassen sich jedoch entgegen den Erwartungen ohne weitere mechanische Verdichtung nach vergleichsweise geringem Dispergieraufwand zu magnetischen Aufzeichnungsschichten mit hoher Dichte an magnetischem Material verarbeiten. Magnetische Aufzeichnungsträger mit diesen Magnetschichten zeichnen sich durch verbesserte elektroakustische Eigenschaften aus, wobei vor allem besonders hohe Werte für die Kopierdämpfung (gemessen nach DIN 45 519) auftreten.

Als Ausgangsmaterial für das erfindungsgemäße Verfahren lassen sich alle in bekannter Weise herstellbaren Eisen-(III)oxidhydroxide einsetzen.

Zweckmäßigerweise wird dabei der anfallende Eisen(III)oxid-hydroxid-Niederschlag nach dem Abfiltrieren sowie einem eventuellen Auswaschen direkt mit Wasser angeteigt und dann als pumpfähige Masse dem Sprühtrockner zugeführt.

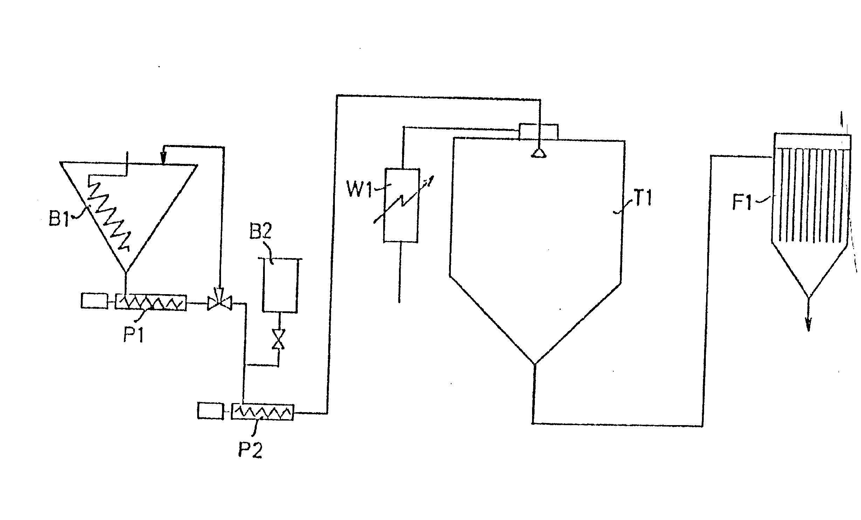

Figur 1 zeigt beispielhaft eine apparatave Anordnung zur Durchführung des erfindungsgemäßen Verfahrensschritts der Eisen(III)oxidhydroxid-Trocknung. Hierbei wird das noch feuchte Eisen(III)oxidhydroxid über einen Behälter B1 und eine Förderpumpe P1 durch Zugabe von Wasser aus dem Behälter B2 mittels der Pumpe P2 dem Zerstäubungstrockner T1 zugeführt. Gleichzeitig wird über den Wärmetauscher W1 das zur Trocknung benutzte Gas, üblicherweise Stickstoff, erhitzt und eingeleitet. Die Eintrittstemperatur dieses Gases muß oberhalb der Siedetemperatur der Trägerflüssigkeit für das Eisen(III)oxidhydroxid liegen und beträgt bei dem üblicherweise hierzu verwendeten Wasser bei 110 bis 500°C.
Der Austrag des getrockneten Produktes geschieht über einen
Filter F1 oder entsprechend dimensionierte Zyklone.

Eine solche Behandlung des ausgefällten Eisen(III)oxidhydroxids bewirkt im Gegensatz zu der üblicherweise durchgeführten Trocknung auf dem Filter und anschließender Granulierung, daß die bei der Bildung des Eisen(III)oxidhydroxids
entstandenen Primärteilchen sich nur sehr wenig berühren,
so daß bei der dann vorgenommenen Umwandlung zum Gamma-
Eisen(III)oxid ein gegenseitiges Versintern der Einzelteilchen weitgehend unterbleibt.

Die Umwandlung eines erfindungsgemäß bearbeiteten Eisen-
(III)oxidhydroxids zum Gamma-Eisen(III)oxid kann anschließend in bekannter Weise geschehen. Dazu wird dieses Eisen-
(III)oxidhydroxid bei 250 bis 350°C mit einem gasförmigen
Reduktionsmittel, zweckmäßigerweise einem Gemisch aus Wasserstoff und Stickstoff, zum Magnetit reduziert und anschließend in oxidierender Atmosphäre, vorzugsweise einem
Stickstoff-Luft-Gemisch, bei 200 bis 350°C zum Gamma-
Eisen(III)oxid oxidiert. Im Rahmen der Herstellung des
Gamma-Eisen(III)oxids lassen sich auch die aus dem Stand
der Technik bekannten zusätzlichen Behandlungen des Materials, wie z.B. ein Tempern des Magnetits vor der sich anschließenden Oxidation, mit Erfolg einsetzen.

Die Bildung eines weitgehend agglomeratfreien Gamm-Eisen-
(III)oxids nach dem erfindungsgemäßen Verfahren läßt sich
mit Hilfe magnetischer Messungen nachweisen. So stellt neben hoher Koerzitivkraft und hoher Remanenz die sogenannte
Remanenzkoerzitivkraft $H_R$ eine wichtige Beurteilungsgröße
dar. Bei der Gleichfeldentmagnetisierung sind bei der Feldstärke $H_R$ bezüglich des Volumens die Häfte der Teilchen ummagnetisiert. Damit ergibt sich eine für Aufzeichnungsvor-

0001435

gänge charakteristische Größe, welche insbesondere den Arbeitspunkt bei der magnetischen Aufzeichnung bestimmt. Je uneinheitlicher die Teilchen und somit auch die Remanenzkoerzitivkraft der jeweils einzelnen magnetischen Teilchen in der Aufzeichnungsschicht ist, desto breiter ist die Verteilung der magnetischen Felder, welche ein begrenztes Volumen der Aufzeichnungsschicht ummagnetisieren können. Dies wirkt sich besonders dann aus, wenn wegen hoher Aufzeichnungsdichten bzw. geringen Wellenlängen der Grenzbereich zwischen entgegengesetzt magnetisierten Bereichen möglichst schmal sein sollte. Für die Charakterisierung der Verteilung der Schaltfeldstärken der einzelnen Teilchen bestimmt man aus der Gleichfeldentmagnetisierungskruve einen Wert $h_5$ für die Gesamtbreite der Remanenzkurve und $h_{25}$ für die Steilheit der Remanenzkurve. Die Werte werden bestimmt nach

$$h_5 = \frac{H_{95} - H_5}{H_R} \quad \text{und}$$

$$h_{25} = \frac{H_{75} - H_{25}}{H_R} \quad .$$

Der Zahlenindex beim Buchstaben H besagt, wieviel der Teilchen in Prozent jeweils ummagnetisiert sind.

Typische Werte für $h_5/h_{25}$ der Gamma-Eisen(III)oxide nach dem Stand der Technik liegen bei 1,63/0,58, die dann nach dem für die Erzielung einer hohen Packungsdichte vorgenommenen Verdichtung des Eisenoxids, z.B. im Walzenspalt, auf 1,70/0,65 ansteigen. Demgegenüber zeigen die gemäß der Erfind erhältlichen Produkte Werte für $h_5/h_{25}$ von 1,25/0,45 bis 1,50/0,48.

Das Fehlen von Agglomeraten bei den Gamma-Eisen(III)oxiden läßt sich auch durch die Bestimmung des Benetzungsvolumens feststellen. Hierbei wird die Menge des vom pulverförmigen Material aufgesogenen Benetzungsmittel, wie z.B. Wasser, organische Lösungsmittel oder Öle, pro Gewichtseinheit Pulver bestimmt. Zu diesem Zweck wird das trockene Pulver auf eine Fritte gegeben und von der anderen Seite der Fritte das Benetzungsmittel herangeführt. Je größer nun die aufgenommene Menge an Benetzungsmittel ist, umso größer ist der Zwischenraum zwischen den einzelnen Partikeln, d.h. umso weniger agglomeriert ist das zu untersuchende Produkt. So zeigen Gamma-Eisen(III)oxide nach dem Stand der Technik Benetzungsvolumina von 2 bis 5 $cm^3$/g, während solche gemäß der Erfindung oberhalb von 6 $cm^3$/g liegen.

Besonders offensichtlich werden die Vorteile von gemäß der Erfindung hergestellten Gamma-Eisen(III)oxide bei der Verarbeitung zu magnetischen Aufzeichnungsträgern. Trotz der geringen Stampfdichte des anfallenden Produktes lassen sich Magnetschichten mit hoher Pigmentdichte erhalten, die dann entsprechend gute elektroakustische Eigenschaften aufweisen. Hervorzuheben ist hierbei insbesondere die höhere Kopierdämpfung, da durch die nicht erforderliche mechanische Verdichtung und intensive Dispergierbehandlung nahezu keine den Kopiereffekt bewirkenden Bruchstücke bei der Auftrennung der Teilchen-Agglomerate und -Sinterhaufwerke entstehen.

Die Erfindung sei anhand folgender Beispiele näher erläutert.

0001435

BASF Aktiengesellschaft -8- O.Z. 0050/032821

Beispiel 1

Ein gemäß DE-AS 12 04 644 gewonnenes $\alpha$-FeOOH wird nach dem Abfiltrieren und Waschen in einer entsprechend Figur 1 ausgebildeten Vorrichtung getrocknet. Dabei wird das filterfeuchte $\alpha$-FeOOH mit Wasser zu einem 10 Gewichtsprozent Feststoff enthaltenden Brei angeteigt, mittels der Pumpe P2 dem Zerstäubungstrockner T1 zugeführt und mittels der mit einer Umfangsgeschwindigkeit von 120 m/sec rotierenden Scheibe verteilt. Gleichzeitig wird über den Wärmeaustauscher W1 Stickstoffgas geleitet, so daß die Stickstoff-Eintrittstemperatur am Zerstäuber 165°C beträgt. Das anschließend in einem Schlauchfilter F1 aufgefangene $\alpha$-FeOOH weist noch eine Restfeuchte von 0,56 % auf.

Ein auf diese Weise getrocknetes $\alpha$-FeOOH wird mit einem Wasserstoff-Stickstoff-Gemisch bei 340°C zum Magnetit und anschließend in einem Luft-Stickstoff-Gemisch bei 200°C zum Gamma-Eisen(III)oxid umgewandelt.

Die Meßergebnisse sind in Tabelle 1 aufgeführt.

Vergleichsbeispiel 1

Wie in Beispiel 1 beschrieben, wird ein gemäß DE-AS 12 04 644 hergestelltes $\alpha$-FeOOH nach dem Abfiltrieren und Waschen in üblicher Weise getrocknet und anschließend entsprechend Beispiel 1 in Gamma-Eisen(III)oxid umgewandelt.

Die Meßergebnisse sind in Tabelle 1 aufgeführt.

0001435

## Tabelle 1

|  | Bsp.1 | Vergl.Bsp.1 |
|---|---|---|
| Stampfdichte d $[g/cm^3]$ | 0,33 | 0,90 |
| Benetzungsvolumen BV $[cm^3/g]$ | 6,16 | 4,95 |
| $h_5/h_{25}$ | 1,47/0,50 | 1,63/0,58 |
| Koezitivfeldstärke $H_c$ $[kA/m]$ (bez. auf d = 1,2) | 27,9 | 26,2 |
| Remanenz $M_{R/d}$ $[nTm^3/g]$ | 44 | 41 |
| Sättigung $M_{m/d}$ $[nTm^3/g]$ | 80 | 77 |

## Beispiel 2

Jeweils 1 000 Teile der Gamma-Eisen(III)oxid-Proben des Beispiels 1 und des Vergleichsbeispiels 1 werden in einer Rührwerkskugelmühle mit 733 Teilen eines Lösungsmittelgemisches aus gleichen Teilen Dioxan und Tetrahydrofuran und 25 Teilen Sojalecithin vermengt und nach Zugabe von 333 Teilen einer 20-prozentigen Lösung eines Vinylchloridcopolymerisats, bestehend aus 80 % Vinylchlorid, 10 % Dimethylmaleinat und 10 % Diäthylmaleinat, im genannten Lösungsmittelgemisch zwei Stunden dispergiert. Danach werden dem Ansatz 140 Teile eines thermoplastischen Polyurethans aus Adipinsäure, 1,4-Butandiol und 4,4'-Diisocyanat-Diphenylmethan als 20-prozentige Lösung in gleichen Teilen Tetrahydrofuran und Dioxan, weiter 970 Teile des genannten Lösungsmittelgemisches und 0,9 Teile eines handelsüblichen Silikonöls zugesetzt. Nach zusätzlichem etwa dreistündigem Dispergieren wird die Dispersion durch eine Zellulose/Asbestfaserschicht filtriert und mittels einer üblichen Beschichtungsmaschine auf eine 12 µm dicke Polyäthylen-

0001435

terephthalat-Folie aufgetragen. Nach Durchlaufen eines magnetischen Richtfeldes wird bei 80 bis 100°C während 2 bis 5 Minuten getrocknet. Die Magnetschicht wird durch Ziehen über beheizte und polierte Walzen bei Temperaturen von 60 bis 80°C geglättet und verdichtet. Die fertige Magnetschicht ist etwa 5 /um dick. Die beschichtete Folie wird in Bänder von 3,81 mm Breite geschnitten.

Die elektroakustischen Eigenschaften der beiden Bandmuster wurden gegen das Standard-Bezugsband T 308 S gemessen. Außer den Werten für die Kopierdämpfung, gemessen nach DIN 45 519, ergaben sich keine besonderen Unterschiede, jedoch zeigte das Magnetband, hergestellt mit dem Gamma-Eisen(III)oxid gemäß Beispiel 1, einen um 3,5 dB höheren Kopierdämpfungswert im Vergleich zum Magnetband, enthaltend das Gamma-Eisen(III)oxid nach Vergleichsbeispiel 1.

Zeichn.

.0001435

<u>Patentanspruch</u>

Verfahren zur Herstellung von weitgehend agglomeratfreiem Gamma-Eisen(III)oxid durch Oxidation von Eisen(II)hydroxid in Suspension eines alkalischen oder sauren Mediums mit sauerstoffenthaltenden Gasen zu nadelförmigem Eisen(III)-oxidhydroxid, Reduktion des Eisen(III)oxidhydroxids zum Magnetit und anschließende Oxidation zum Gamma-Eisen(III)-oxid, <u>dadurch gekennzeichnet</u>, daß das Eisen(III)oxidhy-droxid nach der Herstellung abgetrennt und vor der weiteren Umwandlung mit einer zum Eisen(III)oxidhydroxid inerten Flüssigkeit zu einer pumpfähigen Masse angeteigt, diese Masse in einem Behälter mittels einer rotierenden Scheibe versprüht und durch gegenströmende inerte Gase mit einer Temperatur oberhalb des Siedepunktes der eingesetzten Flüssigkeit getrocknet wird.

**Europäisches Patentamt**

# EUROPÄISCHER RECHERCHENBERICHT

0001435
Nummer der Anmeldung

EP 78 101 016.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 297 813 (MONTEDISON)<br>* Seite 3, Zeilen 12 bis 14 und Seite 6, Zeilen 38 bis 40 *<br>-- | 1 |
| X | US - A - 3 539 294 (P.Y. HWANG)<br>* Anspruch 1 *<br>-- | 1 |
| - | DE - A - 2 064 804 (HI-CRYSTAL)<br>* Anspruch 5 *<br>-- | 1 |
| - | DE - B - 1 160 425 (GEVAERT)<br>* Spalte 4, Zeile 2 *<br>-- | 1 |
| A | US - A - 4 052 255 (L.E. HACKBARTH et al)<br>* Spalte 1 *<br>-- | |
| A | DE - C - 404 480 (RAPPOLD UND VOLK)<br>-- | |
| D | DE - B - 1 204 644 (BASF)<br>---- | |

**KLASSIFIKATION DER ANMELDUNG (Int.Cl.²)**

C 01 G 49/02
// G 11 B 5/62

**RECHERCHIERTE SACHGEBIETE (Int. Cl.²)**

B 01 D 1/18
B 01 D 1/24
B 01 J 2/04
C 01 G 49/00
C 01 G 49/02
C 01 G 49/06
C 09 C 1/24
F 26 B 3/12

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 15-12-1978 | KESTEN |

EPA form 1503.1 06.78